# EUROPEAN PATENT SPECIFICATION

(11) **EP 4 164 207 B1**
(45) Date of publication and mention of the grant of the patent: **17.09.2025**
(21) Application number: 21838887.4
(22) Date of filing: 06.07.2021
(51) Int. Cl.: H04N 23/56, H04N 23/50, H04N 23/51, H04N 23/55, H04N 23/57, H04N 23/71, H04N 23/74, H04N 23/745, H04N 23/75, G03B 15/03, G03B 15/05, G03B 17/02, G03B 30/00, H04M 1/02

(54) **CAMERA MODULE AND ELECTRONIC DEVICE INCLUDING CAMERA MODULE**
KAMERAMODUL UND ELEKTRONISCHE VORRICHTUNG MIT KAMERAMODUL
MODULE DE CAMÉRA ET DISPOSITIF ÉLECTRONIQUE COMPRENANT LE MODULE DE CAMÉRA

(30) Priority: 09.07.2020 KR 20200084638
(43) Date of publication of application: 12.04.2023
(73) Proprietor: Samsung Electronics Co., Ltd., Gyeonggi-do 16677 (KR)
(72) Inventor: LEE, Jeongseok, Suwon-si, Gyeonggi-do 16677 (KR); KIM, Beomju, Suwon-si, Gyeonggi-do 16677 (KR); KIM, Ilyoung, Suwon-si, Gyeonggi-do 16677 (KR); JUNG, Seunghwan, Suwon-si, Gyeonggi-do 16677 (KR)
(74) Representative: HGF
(86) International application number: PCT/KR2021/008543
(87) International publication number: WO 2022/010216

(56) References cited:
- CN-A- 110 879 491
- JP-A- 2012 230 427
- KR-A- 20140 133 002
- KR-A- 20180 096 178
- KR-A- 20190 020 474
- KR-B1- 101 389 047
- US-A1- 2019 082 083

## Description

### [Technical Field]

Various embodiments disclosed in the document relate to a camera module and an electronic device including the camera module.

### [Background Art]

Various types of cameras may be mounted on an electronic device. Multiple cameras may also be included in an electronic device to enable photographing under various photographing conditions (e.g., a focal length or an angle of view). For example, a standard camera, a wide-angle camera, and a telephoto camera may be included in an electronic device, according to an angel of view.

In addition, a light-emitting part such as a flash may be included in an electronic device to enable a user to easily take a picture in a dark environment (e.g., at night, in doors, etc.) with little light. The flash may enable a proper shutter speed to be ensured in dark environments so as to prevent a phenomenon in which a shaky picture is taken, and enable an appropriate sensitivity (e.g., the international standard organization (ISO) value) to be maintained so as to prevent excessive noise from being included in a photographed image.

US 2019/082083 A1 discusses portable electronic devices having I/O assemblies that can include optical and audio components. An exemplary I/O assembly can include a first camera module and a second camera module that can be carried within a camera module housing. CN 110879491 A discusses a display device which comprises a display module, a lens module, and a transparent cover plate.

### [Disclosure of Invention]

### [Technical Problem]

In case that photographing using a flash is performed, a part of light emitted from a flash may be introduced into a camera. For example, light of the flash may be reflected by mechanical elements included in a camera module and thus be introduced into a camera. This phenomenon may occur more frequently according to the reduction of the sizes of an electronic device and a camera module.

In addition, in case that light of a flash is directly introduced into a camera, a ghost image problem, in which over-exposure occurs in a photographed image, may occur.

Various embodiments disclosed in the document may provide a camera module capable of preventing a phenomenon in which light emitted from a flash is introduced into a camera, and an electronic device including the camera module.

### [Solution to Problem]

The invention is set out in the appended set of claims.

### [Advantageous Effects of Invention]

According to various embodiments disclosed in the document, it may be possible to block light, which is emitted from a flash disposed close to a camera positioned in an electronic device, from being introduced into the camera. Therefore, it may be possible to prevent light of the flash from being introduced into the camera so that the quality of a result image photographed by the camera is improved.

### [Brief Description of Drawings]

In connection with descriptions of the drawings, same or similar reference numerals will be used to refer to same or similar elements.
FIG. 1 is a block diagram of an electronic device in a network environment according to various embodiments.
FIG. 2A is a front perspective view of an electronic device according to various embodiments.
FIG. 2B is a rear perspective view of the electronic device illustrated in FIG. 2A.
FIG. 2C is a perspective view of a camera module included in an electronic device according to various embodiments disclosed in the document.
FIG. 3A is a cross-sectional view of the camera module taken along line A-A illustrated in FIG. 2C.
FIG. 3B is a view showing a simplified representation of the cross-sectional view illustrated in FIG. 3A.
FIG. 4A to FIG. 4C are schematic cross-sectional views of a camera module including a protrusion according to various embodiments disclosed in the document.
FIG. 5 is a view showing a pattern of a cover member according to various embodiments disclosed in the document.
FIG. 6 is examples of a pattern according to various embodiments disclosed in the document.
FIG. 7 is a view explaining the effect of a pattern according to various embodiments disclosed in the document.

### [Mode for the Invention]

It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

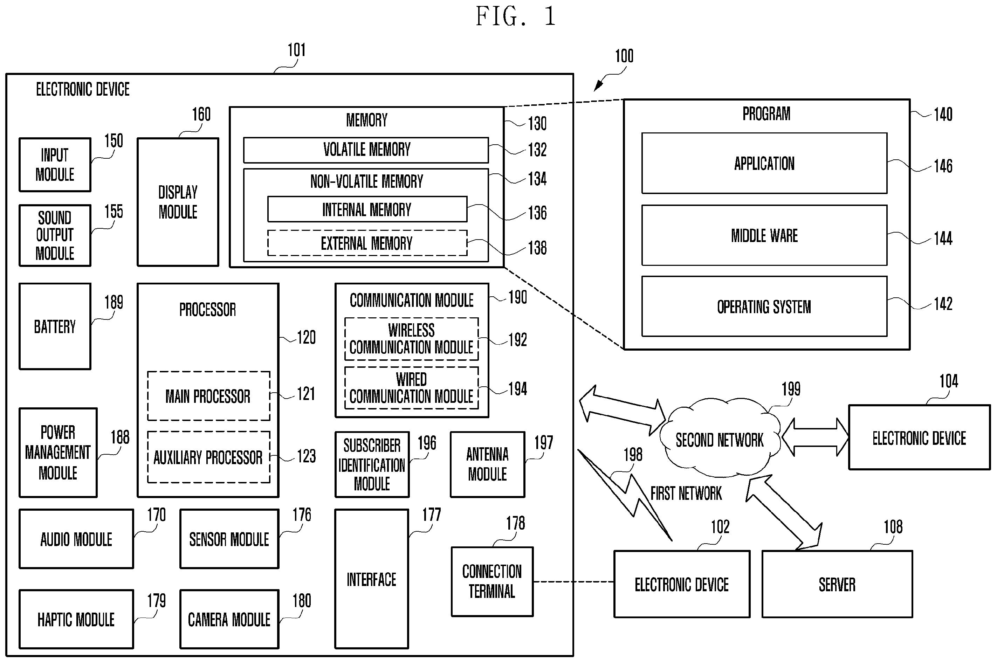

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

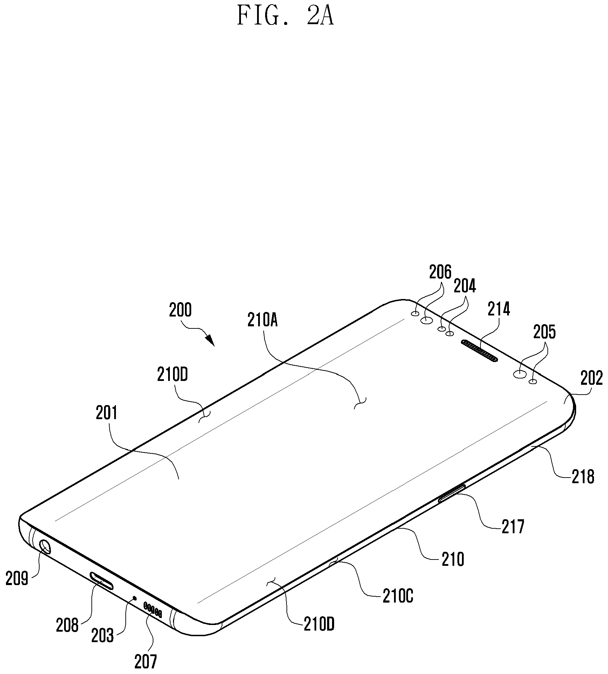

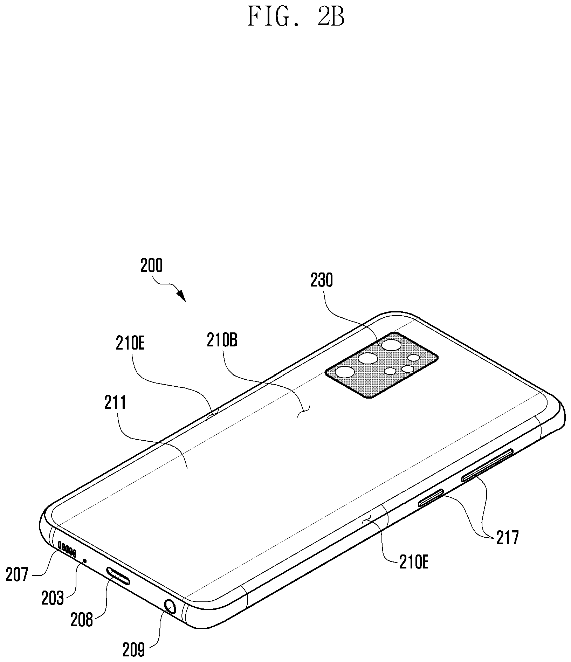

FIG. 2A is a front perspective view of an electronic device according to various embodiments. FIG. 2B is a rear perspective view of the electronic device illustrated in FIG. 2A.

Referring to FIG. 2A and FIG. 2B, an electronic device 200 according to an embodiment may include a first surface (or a front surface) 210A, a second surface (or a rear surface) 210B, and a housing 210 including a side surface 210C surrounding a space between the first surface 210A and the second surface 210B. In another embodiment (not shown), a housing may be referred to as a structure which forms a part among the first surface 210A in FIG. 2A, the second surface 210B in FIG. 2B, and the side surface 210C. According to an embodiment, the first surface 210A may be formed by a front plate 202 of which at least a portion is substantially transparent. In another embodiment, the front plate 202 may be coupled to the housing 210 and may form an inner space together with the housing 210. In various embodiments, the term 'an inner space' may mean a space for accommodating at least a part of the display 201 as an inner space of the housing 210.

According to various embodiment, the second surface 210B may be formed by a rear plate 211 substantially opaque. For example, the rear plate 211 may be formed by coated or colored glass, ceramic, polymer, metal (e.g., aluminum, stainless steel (STS), or magnesium), or a combination of at least two of the above materials. The side surface 210C may be coupled to the front plate 202 and the rear plate 211, and may be formed by a side bezel structure (or "a lateral member") 218 including metal and/or polymer. In various embodiments, the rear plate 211 and the side bezel structure 218 may be integrally formed, and may include the same material (e.g., a metal material such as aluminum).

In the illustrated embodiment, the front plate 202 may include two first areas 210D (e.g., curved-surface areas) which are provided at opposite long edge ends of the front plate 202 and bent from the first surface 210A toward the rear plate 211 so as to extend seamlessly. In the illustrated embodiment, the rear plate 211 may include two second areas 210E (e.g., curved-surface areas) which are provided at opposite long edge ends thereof and bent from the second surface 210B toward the front plate 202 so as to extend seamlessly. In various embodiments, the front plate 202 (or the rear plate 211) may include only one of the first areas 210D (or the second areas 210E). In another embodiment, a part of the first areas 210D or the second areas 210E may not be included therein. In the embodiments, when seen from the side surface of the electronic device 200, the side bezel structure 218 may have a first thickness (or width) at the side of the side surface (e.g., the side surface through which the connector hole 208 is formed) not including the first areas 210D or the second areas 210E, and may have a second thickness thinner than the first thickness at the side of the side surface (e.g., the side surface on which the key input device 217 is disposed) including the first areas 210D or the second areas 210E.

According to an embodiment, the electronic device 200 may include at least one of a display 201, audio modules 203, 207, and 234, a sensor module 204, camera modules 205 and 230, a key input device 217, a light-emitting element 206, and connector holes 208 and 209. In various embodiments, at least one (e.g., the key input device 217 or the light-emitting element 206) of elements may be omitted from the electronic device 200, or other elements may be additionally included therein.

For example, the display 201 may be exposed through a substantial portion of the front plate 202. In various embodiments, at least a part of the display 201 may be exposed through the front plate 202 forming the first surface 210A and the first areas 210D of the side surface 210C. In various embodiments, the edge of the display 201 may be formed to have a shape substantially the same as the shape of the outer perimeter of the front plate 202, which is adjacent thereto. In another embodiment (not shown), in order to expand an area which allows the display 201 to be exposed, the gaps between the outer perimeter of the display 201 and the outer perimeter of the front plate 202 may be formed to be substantially the same.

In another embodiment (not shown), a recess or an opening may be formed in a part of a screen display area (e.g., an active area) of the display 201 or a part of an area (e.g., an inactive area) outside the screen display area, and at least one of the audio module 234, the sensor module 204, the camera modules 205 and 230, and the light-emitting element 206, which are aligned with the recess or the opening, may be included therein. In another embodiment (not shown), at least one of the audio module 234, the sensor module 204, the camera modules 205 and 255, and the light-emitting element 206 may be included on the rear surface of the screen display area of the display 201. In another embodiment (not shown), the display 201 may be coupled to or disposed adjacently to a touch detection circuit, a pressure sensor capable of measuring the intensity (pressure) of touch, and/or a digitizer for detecting a stylus pen of a magnetic field type. In some embodiments, at least a part of the sensor module 204 and/or at least a part of the key input device 217 may be disposed in the first areas 210D and/or the second areas 210E.

The audio modules 203, 207, and 214 may include a microphone hole 203 and speaker holes 207 and 214. A microphone for obtaining external sound may be disposed inside the microphone hole 203, and in various embodiments, multiple microphones may be arranged to detect the direction of sound. The speaker holes 207 and 214 may include an external speaker hole 207 and a receiver hole 214 for a phone call. In various embodiments, the speaker holes 207 and 214 and the microphone hole 203 may be implemented as one hole, or a speaker (e.g., a piezo speaker) may be included therein without the speaker holes 207 and 214.

The sensor module 204 may generate an electrical signal or a data value corresponding to an internal operation state of the electronic device 200 or an external environmental state. For example, the sensor module 204 may include a first sensor module 204 (e.g., a proximity sensor) and/or a second sensor module (not shown) (e.g., a fingerprint sensor) disposed on the first surface 210A of the housing 210, and/or another sensor module (not shown) (e.g., an HRM sensor or a fingerprint sensor) disposed on the second surface 210B of the housing 210. A fingerprint sensor may be disposed on not only the first surface 210A (e.g., the display 201) of the housing 210 but also the second surface 210B. The electronic device 200 may further include a sensor module not illustrated, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor 204.

The camera modules 205 and 230 may include a first camera device 205 disposed on the first surface 210A of the electronic device 200, and a second camera device 230 disposed on the second surface 210B. The camera devices 205 and 230 each may include one lens or multiple lenses, an image sensor, and/or an image signal processor. In various embodiments, two or more lenses (an infrared camera, a wide-angle lens, and a telephoto lens) and image sensors may be arranged on one surface of the electronic device 200.

The key input device 217 may be disposed on the side surface 210C of the housing 210. In another embodiment, the electronic device 200 may not include a part or the whole part of the key input device 217 mentioned above, and the key input device 217 not included therein may be implemented as a different type such as a soft key, on the display 201.

For example, the light-emitting element 206 may be disposed on the first surface 210A of the housing 210. For example, the light-emitting element 206 may provide state information of the electronic device 200 in the form of light. In another embodiment, for example, the light-emitting element 206 may provide a light source interlocked with an operation of the camera module 205. For example, the light-emitting element 206 may include an LED, an IR LED, and a xenon lamp.

The connector holes 208 and 209 may include a first connector hole 208 capable of accommodating a connector (for example, a USB connector) for transmitting and receiving power and/or data to and from an external electronic device, and/or a second connector hole 209 (for example, an earphone jack) capable of accommodating a connector for transmitting and receiving audio signals to and from an external electronic device.

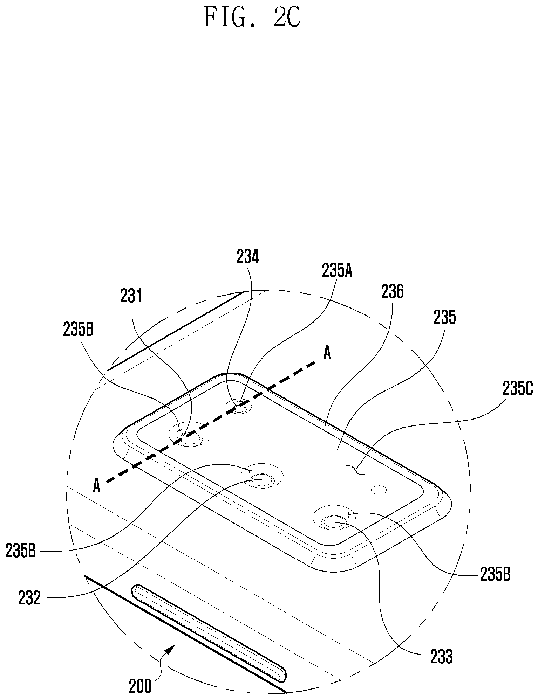

According to various embodiments, the camera module 230 may include at least one light-emitting part 234 and at least one camera 231, 232, or 233 as illustrated in FIG. 2C. In an embodiment, a camera module may include one light-emitting part 234 and three cameras 231, 232, and 233. The overall shape of the camera module 230, the number of the light-emitting part 234, and the cameras 231, 232, 233, and the relative positional relationship between the light-emitting part 234 and the cameras 231, 232, and 233 may be changed in various ways, and it is not limited by the drawings or descriptions.

According to various embodiments, the light-emitting part 234 may generate light. The light-emitting part 234 may include an element (e.g., a light emitting element) capable of generating light. For example, the light-emitting part 234 may include an element such as a light emitting diode (LED), an injection laser diode (ILD), or a xenon lamp. In an embodiment, the light-emitting part 234 may operate in a situation, in which the electronic device 200 photographs, to add light to a dark photographing environment, and thus may enable taking a picture with an appropriate shutter speed and sensitivity (e.g., an international standard organization (ISO) value). In another embodiment, the light-emitting part 234 may operate alone to be used as a flash by a user.

According to various embodiments, the cameras 231, 232, and 233 may include an image sensor converting light reflected from an object into an electrical signal. The image sensor may be a sensor such as, for example, a charge coupled device (CCD) or a complementary metal oxide semiconductor (CMOS). The multiple cameras 231, 232, and 233 included in the camera module 230 may be cameras 231, 232, and 233 which are different types or perform different functions. In an embodiment, multiple cameras 231, 232, and 233 may include different types of lenses. Different types of lenses may mean lenses having different lens properties (e.g., an angle of view, a focal length, an autofocus, an f-number, or an optical zoom). For example, a first camera 231 may include a lens capable of taking images at a first angle of view, a second camera 232 may include a lens capable of taking images at a second angle of view, and a third camera 233 may include a lens capable of taking images at a third angle of view, which are illustrated in FIG. 2B. The first angle of view may be an angle of view generally classified as a wide angle in the camera field, the second angle of view may be an angle of view classified as a standard angle, and the third angle of view may be an angle of view classified as a zoom angle.

According to various embodiments, the cover member 235 may be disposed on a partial area of the camera module 230. According to an embodiment, as illustrated in FIG. 2A and FIG. 2B, the cover member 235 may be disposed on a portion in which the camera **module** 230 is exposed to the outside the electronic device 200. At least a partial area of the cover member 235 may be formed of a material having high transmissivity to light. For example, the cover member 235 may be formed of substantially transparent glass or synthetic resin. The cover member 235 may block external foreign substances from being introduced into the camera module 230. The cover member 235 may be exposed to the external environment, and thus may be formed of a material having good durability (e.g., hardness, strength, corrosion resistance). According to an embodiment, the cover member 235 may include a material capable of improving optical properties of the camera module 230. The material may be disposed on the surface of the cover member 235 by a manner such as coating or printing.

According to various embodiments, the cover member 235 may be divided into multiple areas. As illustrated in FIG. 2C, the cover member 235 may be divided into a first area 235A substantially facing the light-emitting part 234, a second area 235B substantially facing the camera 231, and a third area 235C which is an area other than the first area 235A and the second area 235B. The third area 235C of the cover member 235 may have a material having low light transmissivity, which is disposed in a manner such as coating or printing. For example, a material, which has high absorptivity to light and thus is tinged with black, is disposed on the third area 235C.

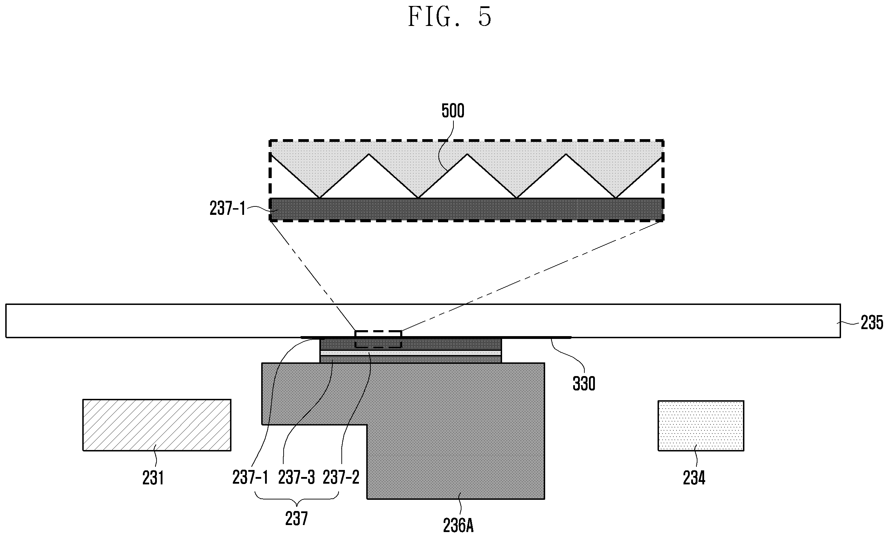

According to various embodiments, a pattern (e.g., the pattern 500 in FIG. 5) may be formed on at least a part of the third area 235C of the cover member 235. The pattern formed on the cover member 235 will be described later.

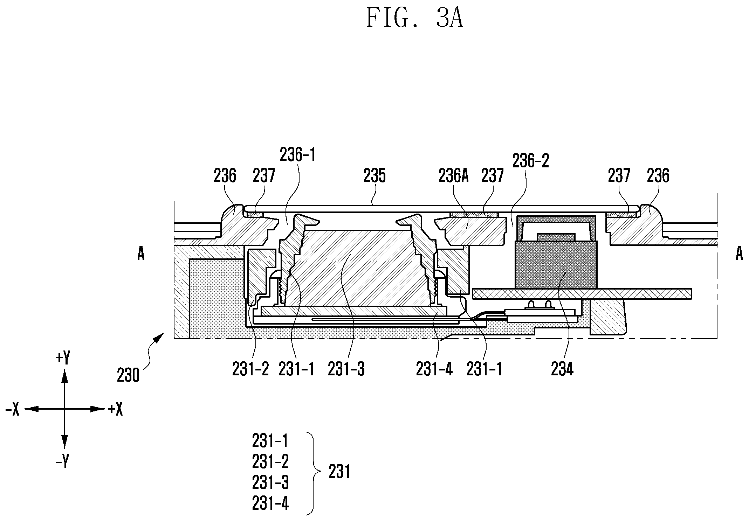

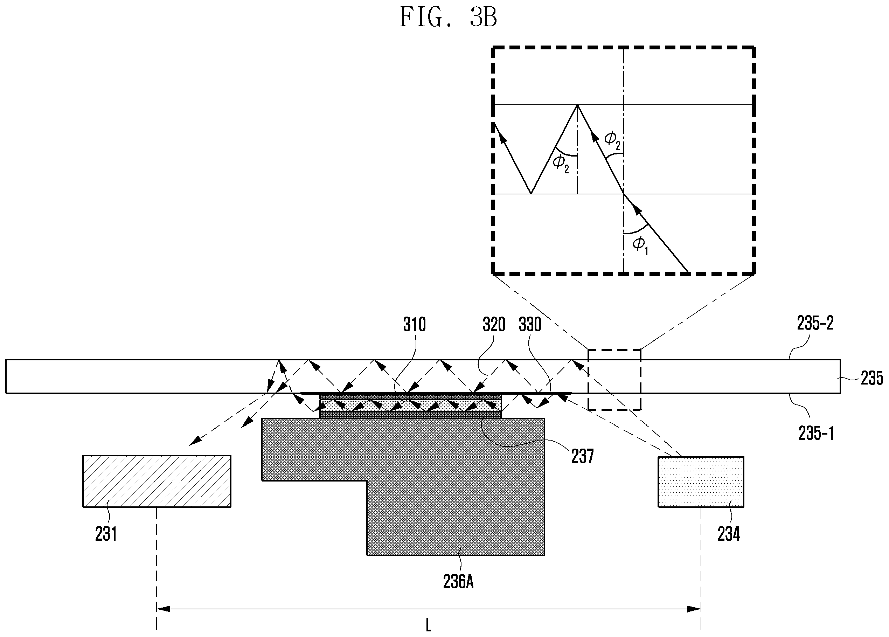

FIG. 3A is a cross-sectional view of the camera module taken along line A-A illustrated in FIG. 2C, and FIG. 3B is a view showing a simplified representation of the cross-sectional view illustrated in FIG. 3A.

According to various embodiments, as illustrated in FIG. 3A, the cover housing 236 may include a first portion 236-1 formed such that a part of the light-emitting part 234 is inserted, and a second portion 236-2 formed such that a part of the camera 231 is inserted. The first portion 236-1 and the second portion 236-2 may be openings formed through the cover housing 236. Light from the outside of the electronic device 200 may enter the camera 231 through the first portion 236-1, and light of the light-emitting part 234 may be emitted to the outside of the electronic device 200 through the second portion 236-2. The cover housing 236 may be disposed to cover the light-emitting part 234 and the camera 231 in the + Y-direction, based on FIG. 3A. For example, the cover housing 236 may be formed of a metal material or a synthetic resin material.

According to various embodiments, the camera 231 may include a lens assembly 231-3 including at least one lens, a first body 231-1 for accommodating the lens assembly 231-3, and a second body 231-2 formed to surround the first body 231-1. In an embodiment, the first body 231-1 and the second body 231-2 may be formed of the same material. The camera 231 may include an image sensor (not shown) for converting light into an electrical signal and a substrate 231-4 on which the image sensor is disposed, and may include a flexible printed circuit board for connecting the substrate and a printed circuit board disposed inside the electronic device 200.

According to various embodiments, the light-emitting part 234 and the camera 231 may be arranged to be spaced at a predetermined interval apart from each other. A separation area 236A of the cover housing 236 may mean an area for separating a space in which the light-emitting part 234 is disposed and a space in which the camera 231 is disposed, on the cover housing 236. The separation area 236A may be formed of the same material as the cover housing 236 or may be formed of a material different from that of the cover housing 236.

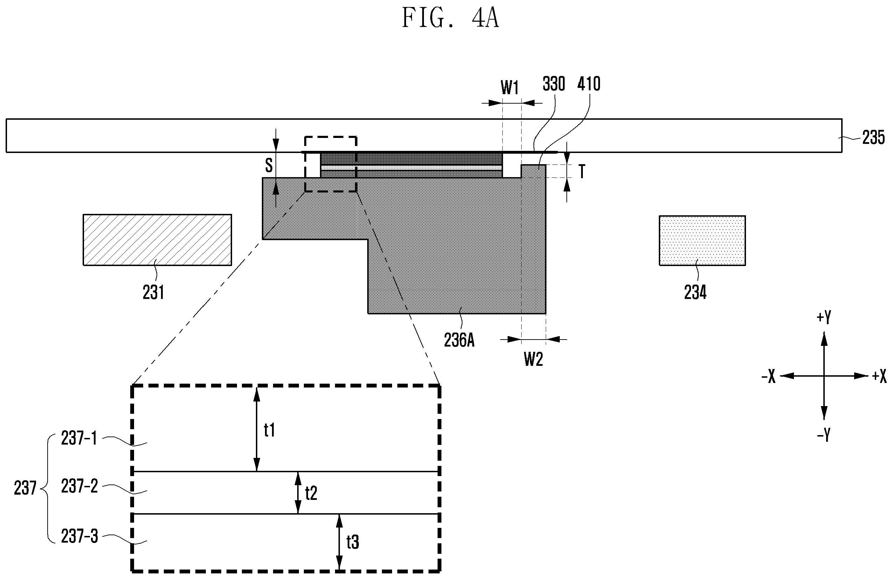

According to various embodiments, an adhesive member 237 may be disposed between the separation area 236A of the cover housing 236 and the cover member 235. The adhesive member 237 may be formed of a material having an adhesive property. The cover member 235 may be disposed on the cover housing 236 by the adhesive member 237. The cover member 235 may be attached to the cover housing 236 by the adhesive member 237. In an embodiment, the adhesive member 237 may include a portion (e.g., the first layer 237-1 and third layer 237-3 in FIG. 4A) having relatively low light transmittance and a portion (e.g., the second layer 237-2 in FIG. 4A) having relatively high light transmittance.

Various embodiments disclosed in the document may be for reducing a phenomenon in which light generated from the light-emitting part 234 is delivered to the camera 231. Referring to FIG. 3B, a path, through which light of the light-emitting part 234 is delivered to the camera 231, will be described.

A first path 310 may be a path through which light generated from the light-emitting part 234 is delivered to the camera 231 via the adhesive member 237. For example, light may be delivered to the camera 231 by passing through a material (e.g., the second layer 237-2 in FIG. 4A) having a relatively high light transmittance among materials constituting the adhesive member 237. As illustrated in FIG. 3B, light reflected from the cover member 235 and the separation area 236A of the cover housing 236 may pass through the adhesive member 237 and then be delivered to the camera 231.

A second path 320 may be a path through which light generated from the light-emitting part 234 is delivered to the camera 231 via the cover member 235. Light generated from the light-emitting part 234 may be refracted on the first surface 235-1 of the cover member 235, and thus may be incident to the cover member 235 and be partially reflected on the second surface 235-2 of the cover member 235. Since the refractive index of the cover member 235 is greater than that of air, the incidence angle Φ1, at which light is incident to the cover member 235, may be greater than the refraction angle Φ2 with respect to the first surface 235-1 of the cover member 235. Light incident to the cover member 235 may be repeatedly reflected from the first surface 235-1 and the second surface 235-2 of the cover member 235, and thus may travel in a direction in which the camera 231 is disposed.

According to various embodiments, an opaque layer 330 may be disposed on an area of the cover member 235. The opaque layer 330 may be formed of a material having a low transmissivity to light. For example, the opaque layer 330 may include a material tinged with black. The opaque layer 330 may be positioned on an area of the cover member 235 by a manner such as coating, printing, or deposition. In an embodiment, the opaque layer 330 may be positioned on the first surface 235-1 of the cover member 235. Based on FIG. 3B, the opaque layer 330 may be disposed on the first surface 235-1 of the cover member 235 so as to extend further to the right than the right end of the separation area 236A. The opaque layer 330 may reduce that a part of light traveling through the second path 320 is introduced into the first path 310. The opaque layer 330 illustrated in FIG. 4A to FIG. 4C and FIG. 5 may be also the same as described above, and thus descriptions on the opaque layer 330 will be omitted below.

Hereinafter, the content of reducing light moving to the first path 310 and the content of reducing light moving to the second path 320 will be described in order.

FIG. 4A to FIG. 4C are schematic cross-sectional views of a camera module including a protrusion according to various embodiments disclosed in the document.

According to various embodiments, the adhesive member 237 may include multiple layers 237-1, 237-2, and 237-3. A first layer 237-1 of the adhesive member 237 may be a portion adjacent to the cover member 235, a third layer 237-3 may be a portion adjacent to the separation area 236A, and a second layer 237-2 may be a portion disposed between the first layer 237-1 and the third layer 237-3. The first layer 237-1 and the third layer 237-3 may include a material having relatively low light transmittance. For example, the first layer 237-1 and the third layer 237-3 may include a black glue material. The second layer 237-2 may include a material having relatively high light transmittance. For example, the second layer 237-2 may be formed of a PET film. In an embodiment, a thickness t1 of the first layer 237-1 may be about 170 µm, a thickness t2 of the second layer 237-2 may be about 40 µm, and a thickness t3 of the third layer 237-3 may be about 90 µm. Since the above descriptions are merely an example of the adhesive member 237, the adhesive member 237 may be formed of a single layer, formed of two layers, or formed of four or more layers. In addition, the thickness of each of the layers 237-1, 237-2, and 237-3 may be also merely an example, and thus the thickness thereof may be variously changed as needed.

According to various embodiments, as illustrated in FIG. 4A, a protrusion 410 may be formed on the cover housing 236. The protrusion 410 may reduce the amount of light introduced into the camera 231 through a first path (e.g., the first path 310 in FIG. 3B). The protrusion 410 may be formed on the separation area 236A of the cover housing 236 so as to protrude from a position adjacent to the adhesive member 237 toward the cover member 235 (e.g., the + Y-direction in FIG. 4A). The protrusion 410 may be formed of the same material as the cover housing 236, or may be formed of a material different from the cover housing 236.

According to various embodiments, the amount of light introduced from the light-emitting part 234 into the adhesive member 237 may be reduced by the protrusion 410. The protrusion 410 protruding toward the cover member 235 may reduce a space through which light generated from the light-emitting part 234 moves to the adhesive member 237.

**[Table 1]**

| Classification | Standard | First structure | Second structure | Third structure |
|---|---|---|---|---|
| Height of Protrusion (T) | 0 µm | 150 µm | 200 µm | 250 µm |
| Width of protrusion (W2) | 0 µm | 300 µm | 300 µm | 300 µm |
| Distance between protrusion and adhesive member (W1) | 0 µm | 500 µm | 500 µm | 500 µm |
| Amount of light | 1020 Lux | 0.122 Lux | 0.089 Lux | 0.000 Lux |

Table 1 is a table showing data which is experimentally confirmed in that the light amount of a first path (e.g., the first path 310 in FIG. 3B) is reduced by the actual protrusion 410. The data is obtained by quantitatively measuring the decrease in the amount of light moving to the first path according to a height T of the protrusion 410 in a state where the width W2 of the protrusion 410 is fixed to 300 µm, and the distance W1 between the adhesive member 237 and the protrusion 410 is fixed to 500 µm. Referring to the experimental data, in case that the protrusion 410 is not included therein (based on Table 1), light of 1020 Lux may move to the first path, and in case that the height T of the protrusion 410 is 150 µm (a first structure), it may be identified that light of 0.122 Lux moves to the first path. In case that the height T of the protrusion 410 is 200 µm (a second structure), light of 0.089 Lux may move to the first path. In case that the height of the adhesive member 237 is 300 µm, the distance S between the separation area 236A and the cover member 235 may be 300 µm. In case the height T of the protrusion 410 is 250 µm (a third structure), the distance between the protrusion 410 and the cover member 235 may be 50 µm. At this time, when the intensity of light introduced into the first path is measured to the third decimal place, the intensity thereof is 0.000 Lux. In the third structure, there may be substantially no light moving to the first path. As described above, the protrusion 410 may reduce the amount of light moving to the first path.

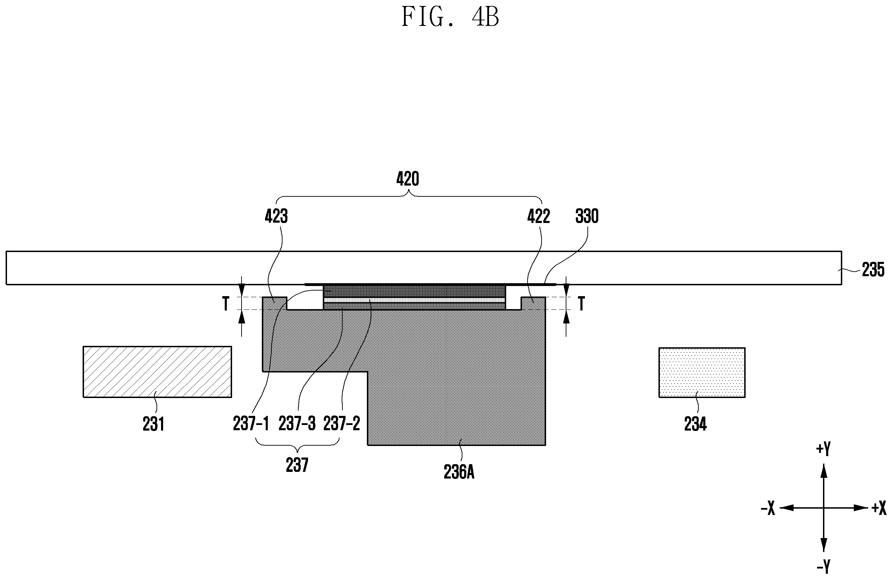

According to various embodiments, as illustrated in FIG. 4B, the protrusion 420 may include a first protrusion 422 protruding from a position of the cover housing 236, which is adjacent to the light-emitting part 234, in the direction (e.g., the + Y-direction in FIG. 4B) of the cover member 235 by a height T, and a second protrusion 423 protruding from a position of the cover housing 236, which is adjacent to the camera 231, in the direction (e.g., the + Y-direction in FIG. 4B) of the cover member 235 by a height T. According to an embodiment, the height of the first protrusion 422 and the height of the second protrusion 423 may be equal to each other, the height of the first protrusion 422 may be formed higher than the height of the second protrusion 423, and conversely, the height of the second protrusion 423 may be formed higher than the height of the first protrusion 422. In an embodiment, the protrusion 420 may include at least one of the first protrusion 422 and the second protrusion 423. The first protrusion 422 may limit a path through which light generated from the light-emitting part 234 is introduced into the adhesive member 237. The second protrusion 423 may limit a path through which light generated from the light-emitting part 237 is introduced into the camera 231. Due to the first protrusion 422 and the second protrusion 423, the amount of light moving to the first path 310 may be reduced.

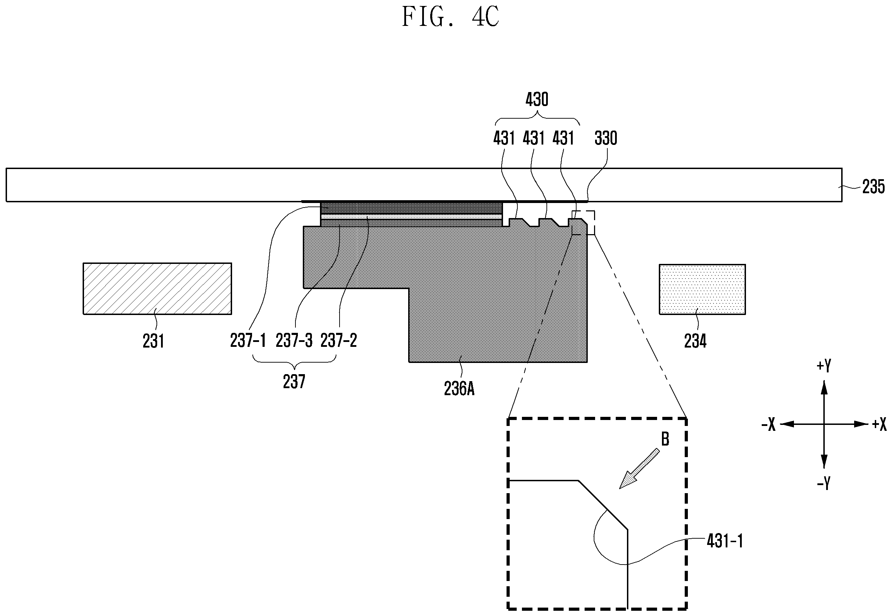

According to various embodiments, as illustrated in FIG. 4C, the protrusion 430 may include multiple protrusions 431 formed on the separation area 236A of the cover housing 236 so as to protrude toward the cover member 235 (e.g., the + Y-direction in FIG. 4C). The protrusions 431 may be arranged to be spaced apart from each other at a predetermined interval. In an embodiment, as illustrated in FIG. 4C, the protrusions 431 may be formed to be inclined with respect to the separation area 236A. One surface of the cross-section of each of the protrusions 431 may form a predetermined angle with one surface of the cross-section of the separation area 236A. The light B incident to an inclined surface 431-1 of the protrusion 431 may have a reduced reflection angle and thus the number of times of reflection required until the light reaches the camera 231 may be increased, so that the amount of light reaching the camera 231 may be reduced. In an embodiment, among one surface of the cross-section of the protrusion 431, the surface 431-1 facing the light-emitting part 234 may be inclined such that light generated from the light-emitting part 234 is incident to the inclined surface 431-1 of the protrusion 431.

In some cases, the moving direction thereof may be changed, and thus light may not reach the camera 231. In connection with the increase of a path due to the decrease of the reflection angle and the decrease of the light amount due to the increase in the number of times of reflection, it will be described in more detail in a section explaining the content of reducing light moving to a second path (e.g., the second path 320 in FIG. 3B).

In addition, the shape of the protrusion may be variously changed.

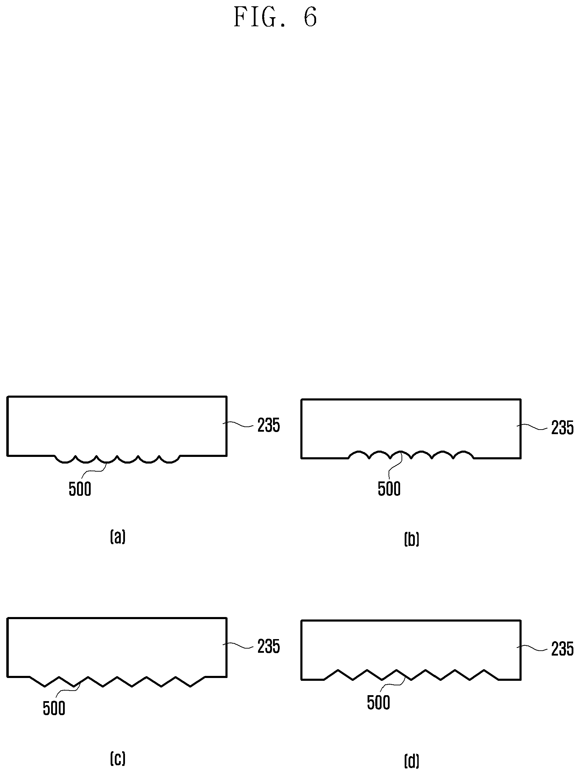

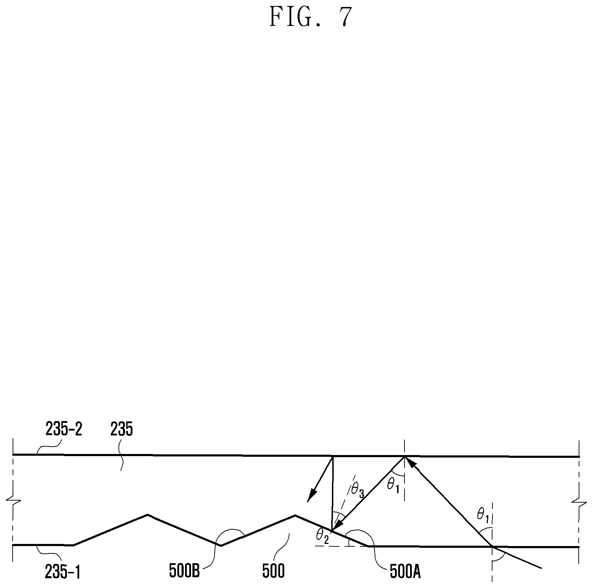

FIG. 5 is a view showing a pattern of a cover member according to various embodiments disclosed in the document, FIG. 6A to FIG. 6D are examples of a pattern according to various embodiments disclosed in the document, and FIG. 7 is a view explaining the effect of a pattern according to various embodiments disclosed in the document.

According to various embodiments, a pattern 500 may be formed on at least one portion of the cover member 235. The pattern 500 may reduce the amount of light introduced into the camera 231 through a second path (e.g., the second path 320 in FIG. 3B).

According to various embodiments, the pattern 500 may be formed on at least one portion of a third area (e.g., the third area 235C in FIG. 2B) of the cover member 235.

According to various embodiments, the pattern 500 may be formed on at least one of the first surface 235-1 and the second surface 235-2 of the cover member 235. The first surface 235-1 of the cover member 235 may be one of the surfaces of the cover member 235 and may be a surface facing the cover housing 236, and the second surface 235 of the cover member 235-2 may be a surface opposite to the first surface 235-1.

According to various embodiments, the pattern 500 may be formed by deformation of a part of the surface of the cover member 235. For example, a concave-convex may be formed on the surface of the cover member 235 by a physical and chemical method (e.g., etching). The concave-convex may be repeatedly formed to constitute the pattern 500. The pattern 500 may be formed on at least one of the first surface 235-1 and the second surface 235-2 of the cover member 235 so as to protrude to a predetermined height (e.g., FIGS. 6A and 6C) or so as to be concave to a predetermined depth (e.g., FIGS. 6B and 6D). What is formed to protrude may mean that the portion, on which the pattern 500 is formed, is disposed outside the surface of the cover member 235, and what is formed to be concave may mean that the portion, on which the pattern 500 is formed, is disposed inside the surface of the cover member 235. The shape of the pattern 500 may be variously changed. The pattern 500 may be formed to have a shape having a sharp, a flat, an angled, or a round end, and the overall shape of the pattern 500 may be a funnel, a lozenge-shaped rectangular column, a rectangular pyramid, or a cylindrical shape. In an embodiment, the shape of the pattern 500 may be the shape illustrated in FIG. 6.

Light generated from the light-emitting part 234 may be incident to the first surface 235-1 of the cover member 235. A part of light incident to the first surface 235-1 of the cover member 235 may pass through the cover member 235 and then be emitted to the outside, and a part thereof may be reflected from the second surface 235-2 of the cover member 235. A part of light reflected from the second surface of the cover member 235 may pass through the first surface 235-1 of the cover member 235 again, and a part thereof may be reflected from the first surface 235-1 of the cover member 235. As described above, a part of light incident to the cover member 235 may be reflected from the first surface 235-1 and the second surface 235-2 of the cover member 235, and then may travel to the space in which the camera 231 is disposed. The reflections made on the first surface 235-1 and the second surface 235-2 of the cover member 235 may be expressed as reflections made inside the cover member 235.

**[Table 2]**

| Incidence angle | 90 | 80 | 70 | 60 | 50 | 40 | 30 | 20 | 10 | 0 |
|---|---|---|---|---|---|---|---|---|---|---|
| Reflection angle | 41.8 | 41.0 | 38.8 | 35.3 | 20.7 | 25.4 | 19.5 | 13.2 | 6.6 | 0 |
| Reflectivity | 100.0 0% | 38.77 % | 17.10 % | 8.92 % | 5.77 % | 4.57 % | 4.15 % | 4.03 % | 4.00 % | 4.00 % |
| Number of times of reflection | 11.2 | 11.5 | 12.4 | 14.1 | 16.8 | 21.1 | 28.3 | 42.7 | 85.8 | - |
| Amount of light | 1 | 1.872 E-05 | 2.872 E-10 | 1.429 E-15 | 1.379 E-21 | 5.643 E-29 | 8.302 E-40 | 2.682 E-60 | 1.18E -120 | 0 |

Table 2 is experimental data in which the amount of light delivered from the light-emitting part 234 to the camera 231 is measured according to the incidence angle in case that a thickness of the cover member 235 is about 0.5 mm, a distance L between the light-emitting part 234 and the camera 231 is about 5 mm, and light is incident to the cover member 235 having a refractive index of about 1.5 in air having a refractive index of 1. The light amount in Table 2 is a relative light amount in case that the amount of light delivered from the light-emitting part 234 to the camera 231 is defined as 1 in the case where the incidence angle is 90 degrees.

Here, the incidence angle (e.g., the incidence angle Φ1 in FIG. 3B) may mean an incidence angle of light which is incident first to the first surface 235-1 of the cover member 235 from the light-emitting part 234. A refraction angle (e.g., the refraction angle Φ2 in FIG. 3B) may be a refraction angle of light which is incident first to the first surface 235-1 of the cover member 235, and light, which is reflected from the inside the cover member 235 and moves in a direction in which the camera 231 is disposed, may be reflected from the first surface 235-1 and the second surface 235-2 of the cover member 235 at the refraction angle. Therefore, the refraction angle of Table 2 may be understood as a reflection angle of light reflected from the inside of the cover member 235 .

In case that a refraction angle thereof is great, the number of times of reflection (the number of times of reflection in Table 2) in the inside of the cover member 235 may be small. Since only a part of light is reflected in case that reflection is made inside the cover member 235, the amount of light delivered to the camera 231 may also be reduced as the number of times of reflection inside the cover member 235 is large. Referring to Table 2, it may be identified that the amount of light (8.302E-40) delivered to the camera 231 in case that the refraction angle is 19.5 degrees is greatly reduced compared to the amount (1.872E-05) of light delivered to the camera 231 in case that the refraction angle is 41 degrees. It may be understood because the number (28.3) of reflections in case that an internal reflection of the cover member 235 is performed at a refraction angle of 19.5 degrees is greater than the number (11.5) of reflections in case that the internal reflection of the cover member 235 is performed at a refraction angle of 41 degrees.

According to various embodiments, the pattern 500 formed on the cover member 235 may increase the number of times of reflection made inside the cover member 235, and thus may reduce the amount of light delivered from the light-emitting part 234 to the camera 231. Referring to FIG. 7, a reflection angle θ3 of light reflected from the pattern 500 formed on the cover member 235 may be smaller than a refraction angle θ1 of light incident to the cover member 235. Here, the refraction angle θ1 may be a refraction angle of light incident to the cover member 235, and since light incident to the cover member 235 is reflected as the refraction angle of light incident to the cover member 235 in case of being reflected inside the cover member 235, the refraction angle may mean an angle at which light is reflected inside the cover member 235. The reflection angle θ3 may mean a reflection angle of light reflected from the pattern 500. For example, referring to FIG. 7, the reflection angle θ3 of light reflected from the pattern 500 may be smaller than the refraction angle θ1 of light incident to the cover member 235. Light reflected from the pattern 500 of the cover member 235 may be reflected inside the cover member 235 at a reflection angle reduced due to the pattern 500. As described in Table 2, the number of times of reflection in the inside of the cover member 235 may increase as a reflection angle of light reflected inside the cover member 235 is smaller, and thus the amount of light delivered from the light-emitting part 234 to the camera 231 may be reduced. In some cases, a traveling direction of light may be changed due to the pattern 500, and thus light generated from the light-emitting part 234 may not also be delivered to the camera 231.

According to various embodiments, an angle θ2 between the surface of the cover member 235 and one surface (the first surface 500A or the second surface 500B) of the pattern 500 may be determined by the refraction angle θ1 of light incident to the cover member 235. Referring to FIG. 7, on the cross section of the pattern 500, the pattern 500 may include a first surface 500A and a second surface 500B. Light having reached the first surface 500A of the pattern 500 may have a reduced reflection angle due to the pattern 500, and light having reached the second surface 500B of the pattern 500 may not have a reduced reflection angle due to the pattern 500. The ratio of light having reached the first surface 500A among light having reached the pattern 500 may be determined by the equation cos(θ2-θ1)/[cos(θ2-θ1)+cos(θ2+θ1)]. In case that θ1+θ2 becomes 90 degrees, the value of the equation becomes 1, and it may mean that all light having reached the pattern 500 reaches the first surface 500A. By using this, the angle θ2 formed by the surface of the cover member 235 and one surface of the pattern 500 may be determined. By measuring the refraction angle of the main light incident to the cover member 235, the angle θ2 of the pattern 500 may be determined such that the sum of the refraction angle θ1 and the angle θ2 of the pattern 500 becomes 90 degrees.

Various embodiments disclosed in the document may be combined as much as possible within scopes which do not contradict each other. For example, it may also be possible to form a camera module by combining a structure in consideration of the first path 310 described above (e.g., a camera module including the protrusion 500 in FIG. 4A) and a structure in consideration of the second path 320 (e.g., a camera module including the pattern 500 in FIG. 5).

An electronic device according to various embodiments disclosed in the document may include at least one light-emitting part, at least one camera disposed to be spaced apart from the at least one light-emitting part, a cover housing which includes a first portion formed such that at least a part of the at least one light-emitting part is inserted and a second portion formed such that at least a part of the at least one camera is inserted, and is disposed to be able to substantially cover the at least one light-emitting part and the at least one camera, a cover member disposed on the cover housing, an adhesive member disposed between the cover member and the cover housing such that the cover member is attached to the cover housing, and a protrusion formed on the cover housing so as to protrude toward the cover member at a position adjacent to the adhesive member.

In addition, the cover housing may include a separation area configured to separate a space in which the at least one light-emitting part is disposed and a space in which the at least one camera is disposed, the adhesive member may be disposed on the separation area of the cover housing, and the protrusion may be formed on at least a portion of the separation area of the cover housing.

In addition, the protrusion may include at least one of a first protrusion formed on the cover housing at a position adjacent to the at least one light-emitting part such that a path, through which light generated from the at least one light-emitting part is introduced into the adhesive member, is limited, and a second protrusion formed on the cover housing at a position adjacent to the at least one camera such that a path, through which light having passed through the adhesive member is introduced into the at least one camera, is limited.

In addition, the protrusion may include at least two protrusions spaced at a predetermined interval apart from each other and formed on the cover housing so as to protrude toward the cover member.

In addition, the at least two protrusions may be formed to be inclined with respect to the cover housing.

An electronic device according to various embodiments disclosed in the document may include at least one light-emitting part, at least one camera disposed to be spaced apart from the at least one light-emitting part, a cover housing which includes a first portion formed such that at least a part of the at least one light-emitting part is inserted and a second portion formed such that at least a part of the at least one camera is inserted, and is disposed to be able to substantially cover the at least one light-emitting part and the at least one camera, a cover member disposed on the cover housing, and a pattern formed on at least one portion of the cover member such that a reflection angle of light which is incident to the cover member and then reflected from the surface of the cover member becomes smaller than a refraction angle of light generated from the at least one light-emitting part and then incident to the cover member.

In addition, the cover member may include a first area substantially facing the at least one light-emitting part, a second area substantially facing the at least one camera, and a third area except for the first area and the second area, and the pattern may be formed on at least one portion of the third area.

In addition, the cover member may include a first surface facing the cover housing and a second surface opposite to the first surface, and the pattern may be formed on at least one of the first surface and the second surface of the cover member.

In addition, the pattern may be formed to protrude at a predetermined height with respect to at least one of the first surface and the second surface of the cover member or may be concavely formed at a predetermined depth.

An electronic device according to various embodiments disclosed in the document may include at least one light-emitting part, at least one camera spaced apart from the at least one light-emitting part, a cover housing which includes a first portion formed such that at least a part of the at least one light-emitting part is inserted and a second part formed such that at least a part of the at least one camera is inserted, and is disposed to be able to substantially cover the at least one light-emitting part and the at least one camera, a cover member disposed on the cover housing, an adhesive member disposed between the cover member and the cover housing such that the cover member is attached to the cover housing, a protrusion formed on the cover housing so as to protrude toward the cover member at a position adjacent to the adhesive member, and a pattern formed on at least one portion of the cover member such that a reflection angle of light which is incident to the cover member and then reflected from the surface of the cover member becomes smaller than a refraction angle of light generated from the at least one light-emitting part and then incident to the cover member.

A camera module according to various embodiments disclosed in the document may include at least one light-emitting part, at least one camera disposed to be spaced apart from the at least one light-emitting part, a cover housing which includes a first portion formed such that at least a part of the at least one light-emitting part is inserted and a second portion formed such that at least a part of the at least one camera is inserted, and is disposed to be able to substantially cover the at least one light-emitting part and the at least one camera, a cover member disposed on the cover housing, an adhesive member disposed between the cover member and the cover housing such that the cover member is attached to the cover housing, and a protrusion formed on the cover housing so as to protrude toward the cover member at a position adjacent to the adhesive member.

In addition, the cover housing may include a separation area configured to separate a space in which the at least one light-emitting part is disposed and a space in which the at least one camera is disposed, the adhesive member may be disposed on the separation area of the cover housing, and the protrusion may be formed on at least a portion of the separation area of the cover housing.

In addition, the protrusion may include at least one of a first protrusion formed on the cover housing at a position adjacent to the at least one light-emitting part such that a path, through which light generated from the at least one light-emitting part is introduced into the adhesive member, is limited, and a second protrusion formed on the cover housing at a position adjacent to the at least one camera such that a path, through which light having passed through the adhesive member is introduced into the at least one camera, is limited.

The protrusion may include at least two protrusions spaced at a predetermined interval apart from each other and formed on the cover housing so as to protrude toward the cover member.

In addition, the at least two protrusions may be formed to be inclined with respect to the cover housing.

A camera module according to various embodiments disclosed in the document may include at least one light-emitting part, at least one camera disposed to be spaced apart from the at least one light-emitting part, a cover housing which includes a first portion formed such that at least a part of the at least one light-emitting part is inserted and a second portion formed such that at least a part of the at least one camera is inserted, and is disposed to be able to substantially cover the at least one light-emitting part and the at least one camera, a cover member disposed on the cover housing, and a pattern formed on at least one portion of the cover member such that a reflection angle of light which is incident to the cover member and then reflected from the surface of the cover member becomes smaller than a refraction angle of light generated from the at least one light-emitting part and then incident to the cover member.

In addition, the cover member may include a first area substantially facing the at least one light-emitting part, a second area substantially facing the at least one camera, and a third area except for the first area and the second area, and the pattern may be formed on at least one portion of the third area.

In addition, the cover member may include a first surface facing the cover housing and a second surface opposite to the first surface, and the pattern may be formed on at least one of the first surface and the second surface of the cover member.

In addition, the pattern may be formed to protrude at a predetermined height with respect to at least one of the first surface and the second surface of the cover member or may be concavely formed at a predetermined depth.

A camera module according to various embodiments disclosed in the document may include at least one light-emitting part, at least one camera spaced apart from the at least one light-emitting part, a cover housing which includes a first portion formed such that at least a part of the at least one light-emitting part is inserted and a second part formed such that at least a part of the at least one camera is inserted, and is disposed to be able to substantially cover the at least one light-emitting part and the at least one camera, a cover member disposed on the cover housing, an adhesive member disposed between the cover member and the cover housing such that the cover member is attached to the cover housing, a protrusion formed on the cover housing so as to protrude toward the cover member at a position adjacent to the adhesive member, and a pattern formed on at least one portion of the cover member such that a reflection angle of light which is incident to the cover member and then reflected from the surface of the cover member becomes smaller than a refraction angle of light generated from the at least one light-emitting part and then incident to the cover member.

Embodiments disclosed in the document including the specification and the drawings are merely specific examples presented to easily describe the technical content according to the embodiments disclosed in the document and to help understanding of the embodiments disclosed in the document, and are not intended to limit the scope of embodiments disclosed in the document.

## Claims

1. An electronic device (101, 200) comprising:
a light-emitting part (234);
a camera (231, 232, 233) disposed to be spaced apart from the light-emitting part;
a cover housing (236) which comprises a first portion (236-2) formed such that at least a part of the light-emitting part is inserted and a second portion (236-1) formed such that at least a part of the camera is inserted, and is disposed to be able to substantially cover the light-emitting part and the camera;
a cover member (235) disposed on the cover housing, the cover member having a first area (235A) substantially facing the light-emitting part and a second area (235B) substantially facing the camera;
an adhesive member (237) disposed between the cover member and the cover housing such that a portion of the cover housing (236A) located between the light-emitting part and the camera is attached by the adhesive member to the cover member; and
a protrusion (410, 420, 422, 423, 430) protruding from the portion of the cover housing toward the cover member at a position adjacent to the adhesive member and located below the cover member,
wherein the protrusion reduces a space between the cover member and the cover housing and decreases an amount of light generated from the light-emitting part that is introduced into the adhesive member.

2. The electronic device (101, 200) of claim 1, wherein the protrusion (410, 422, 423, 430) comprises at least one of:
a first protrusion formed on the portion of the cover housing (236) at a position adjacent to the light-emitting part (234) such that a path, through which light generated from the light-emitting part is introduced into the adhesive member (237), is limited; and
a second protrusion formed on the portion of the cover housing at a position adjacent to the camera (231, 232, 233) such that a path, through which light having passed through the adhesive member is introduced into the camera, is limited.

3. The electronic device (101, 200) of claim 1, wherein the protrusion (430) comprises at least two protrusions (431) spaced at a predetermined interval apart from each other and formed on the cover housing (236) so as to protrude toward the cover member (235).

4. The electronic device (101, 200) of claim 3, wherein the at least two protrusions (431) are formed to be inclined with respect to the cover housing (236).

5. The electronic device (101, 200) of claim 1, further comprising a pattern (500) formed by a deformation of a part of a surface of the cover member (235) such that a reflection angle of light from the light-emitting part (234) which is incident to the cover member and then reflected from the surface of the cover member becomes smaller than a refraction angle of light generated from the light-emitting part and then incident to the cover member,
wherein the cover member comprises a first surface (235-1) facing the cover housing and a second surface (235-2) opposite to the first surface, and
wherein the pattern is formed on at least one of the first surface and the second surface of the cover member.

6. The electronic device (101, 200) of claim 5, wherein the cover member (235) comprises a third area (235C) except for the first area (235A) and the second area (235B), and
wherein the pattern (500) is formed on at least one portion of the third area.

7. The electronic device (101, 200) of claim 5, wherein the pattern (500) is formed to protrude at a predetermined height with respect to at least one of the first surface (235-1) and the second surface (235-2) of the cover member (235) or is concavely formed at a predetermined depth so that the pattern is disposed inside at least one of the first surface and the second surface of the cover member.

## Patentansprüche

1. Elektronische Vorrichtung (101, 200), umfassend:
einen lichtemittierenden Teil (234);
eine Kamera (231, 232, 233), die angeordnet ist, um von dem lichtemittierenden Teil beabstandet zu sein;
ein Abdeckgehäuse (236), das einen ersten Abschnitt (236-2), der gebildet ist, sodass zumindest ein Teil des lichtemittierenden Teils eingesetzt ist, und einen zweiten Abschnitt (236-1), der gebildet ist, sodass zumindest ein Teil der Kamera eingesetzt ist, umfasst und angeordnet ist, um in der Lage zu sein, den lichtemittierenden Teil und die Kamera im Wesentlichen abzudecken;
ein Abdeckelement (235), das an dem Abdeckgehäuse angeordnet ist, wobei das Abdeckelement einen ersten Bereich (235A), der im Wesentlichen dem lichtemittierenden Teil zugewandt ist, und einen zweiten Bereich (235B), der im Wesentlichen der Kamera zugewandt ist, aufweist;
ein Klebeelement (237), das zwischen dem Abdeckelement und dem Abdeckgehäuse angeordnet ist, sodass ein Abschnitt des Abdeckgehäuses (236A), der sich zwischen dem lichtemittierenden Teil und der Kamera befindet, durch das Klebeelement an dem Abdeckelement angebracht ist; und
einen Vorsprung (410, 420, 422, 423, 430), der von dem Abschnitt des Abdeckgehäuses zu dem Abdeckelement an einer Position benachbart zu dem Klebeelement vorspringt und sich unter dem Abdeckelement befindet,
wobei der Vorsprung einen Raum zwischen dem Abdeckelement und dem Abdeckgehäuse reduziert und eine Menge an Licht verringert, die von dem lichtemittierenden Teil erzeugt wird, die in das Klebeelement eingeführt wird.

2. Elektronische Vorrichtung (101, 200) nach Anspruch 1, wobei der Vorsprung (410, 422, 423, 430) zumindest eines von Folgendem umfasst:
einem ersten Vorsprung, der an dem Abschnitt des Abdeckgehäuses (236) an einer Position benachbart zu dem lichtemittierenden Teil (234) gebildet ist, sodass ein Weg, durch den Licht, das von dem lichtemittierenden Teil erzeugt wird, in das Klebeelement (237) eingeführt wird, begrenzt ist; und
einem zweiten Vorsprung, der an dem Abschnitt des Abdeckgehäuses an einer Position benachbart zu der Kamera (231, 232, 233) gebildet ist, sodass ein Weg, durch den Licht, das durch das Klebeelement hindurchgetreten ist, in die Kamera eingeführt wird, begrenzt ist.

3. Elektronische Vorrichtung (101, 200) nach Anspruch 1, wobei der Vorsprung (430) zumindest zwei Vorsprünge (431) umfasst, die in einem vorbestimmten Intervall voneinander beabstandet und an dem Abdeckgehäuse (236) gebildet sind, um zu dem Abdeckelement (235) vorzuspringen.

4. Elektronische Vorrichtung (101, 200) nach Anspruch 3, wobei die zumindest zwei Vorsprünge (431) gebildet sind, um in Bezug auf das Abdeckgehäuse (236) geneigt zu sein.

5. Elektronische Vorrichtung (101, 200) nach Anspruch 1, ferner umfassend ein Muster (500), das durch eine Verformung eines Teils einer Oberfläche des Abdeckelements (235) gebildet ist, sodass ein Reflexionswinkel von Licht von dem lichtemittierenden Teil (234), das auf das Abdeckelement einfällt und dann von der Oberfläche des Abdeckelements reflektiert wird, kleiner als ein Brechungswinkel von Licht wird, das von dem lichtemittierenden Teil erzeugt wird und dann auf das Abdeckelement einfällt,
wobei das Abdeckelement eine erste Oberfläche (235-1), die dem Abdeckgehäuse zugewandt ist, und eine zweite Oberfläche (235-2) gegenüber der ersten Oberfläche umfasst, und
wobei das Muster auf zumindest einem von der ersten Oberfläche und der zweiten Oberfläche des Abdeckelements gebildet ist.

6. Elektronische Vorrichtung (101, 200) nach Anspruch 5, wobei das Abdeckelement (235) einen dritten Bereich (235C) mit Ausnahme des ersten Bereichs (235A) und des zweiten Bereichs (235B) umfasst, und
wobei das Muster (500) auf zumindest einem Abschnitt des dritten Bereichs gebildet ist.

7. Elektronische Vorrichtung (101, 200) nach Anspruch 5, wobei das Muster (500) gebildet ist, um in einer vorbestimmten Höhe in Bezug auf zumindest eines von der ersten Oberfläche (235-1) und der zweiten Oberfläche (235-2) des Abdeckelements (235) vorzuspringen, oder konkav in einer vorbestimmten Tiefe gebildet ist, sodass das Muster innerhalb von zumindest einem von der ersten Oberfläche und der zweiten Oberfläche des Abdeckelements angeordnet ist.

## Revendications

1. Dispositif électronique (101, 200) comprenant :
une partie électroluminescente (234) ;
une caméra (231, 232, 233) disposée pour être espacée de la partie électroluminescente ;
un boîtier de couvercle (236) qui comprend une première portion (236-2) formée de sorte qu'au moins une partie de la partie électroluminescente soit insérée et une seconde portion (236-1) formée de sorte qu'au moins une partie de la caméra soit insérée, et est disposé pour pouvoir couvrir sensiblement la partie électroluminescente et la caméra ;
un élément de couvercle (235) disposé sur le boîtier de couvercle, l'élément de couvercle comportant une première zone (235A) sensiblement tournée vers la partie électroluminescente et une deuxième zone (235B) sensiblement tournée vers la caméra ;
un élément adhésif (237) disposé entre l'élément de couvercle et le boîtier de couvercle de sorte qu'une portion du boîtier de couvercle (236A) située entre la partie électroluminescente et la caméra est fixée par l'élément adhésif à l'élément de couvercle ; et
une saillie (410, 420, 422, 423, 430) faisant saillie de la portion du boîtier de couvercle vers l'élément de couvercle au niveau d'une position adjacente à l'élément adhésif et située en dessous de l'élément de couvercle,
dans lequel la saillie réduit un espace entre l'élément de couvercle et le boîtier de couvercle et diminue une quantité de lumière générée par la partie électroluminescente qui est introduite dans l'élément adhésif.

2. Dispositif électronique (101, 200) de la revendication 1, dans lequel la saillie (410, 422, 423, 430) comprend au moins l'une parmi :
une première saillie formée sur la portion du boîtier de couvercle (236) au niveau d'une position adjacente à la partie électroluminescente (234) de sorte qu'un chemin, à travers lequel de la lumière générée par la partie électroluminescente est introduite dans l'élément adhésif (237), est limité ; et
une seconde saillie formée sur la portion du boîtier de couvercle au niveau d'une position adjacente à la caméra (231, 232, 233) de sorte qu'un chemin, à travers lequel de la lumière ayant traversé l'élément adhésif est introduite dans la caméra, est limité.

3. Dispositif électronique (101, 200) de la revendication 1, dans lequel la saillie (430) comprend au moins deux saillies (431) espacées à un intervalle prédéterminé l'une de l'autre et formées sur le boîtier de couvercle (236) de façon à faire saillie vers l'élément de couvercle (235).

4. Dispositif électronique (101, 200) de la revendication 3, dans lequel les au moins deux saillies (431) sont formées pour être inclinées par rapport au boîtier de couvercle (236).

5. Dispositif électronique (101, 200) de la revendication 1, comprenant en outre un motif (500) formé par une déformation d'une partie d'une surface de l'élément de couvercle (235) de sorte qu'un angle de réflexion de lumière provenant de la partie électroluminescente (234), qui est incidente sur l'élément de couvercle et ensuite réfléchie par la surface de l'élément de couvercle, devient plus petit qu'un angle de réfraction de lumière générée par la partie électroluminescente et ensuite incidente sur l'élément de couvercle,
dans lequel l'élément de couvercle comprend une première surface (235-1) tournée vers le boîtier de couvercle et une seconde surface (235-2) opposée à la première surface, et
dans lequel le motif est formé sur au moins l'une de la première surface et de la seconde surface de l'élément de couvercle.

6. Dispositif électronique (101, 200) de la revendication 5, dans lequel l'élément de couvercle (235) comprend une troisième zone (235C) à part la première zone (235A) et la deuxième zone (235B), et
dans lequel le motif (500) est formé sur au moins une portion de la troisième zone.

7. Dispositif électronique (101, 200) de la revendication 5, dans lequel le motif (500) est formé pour faire saillie au niveau d'une hauteur prédéterminée par rapport à au moins l'une de la première surface (235-1) et de la seconde surface (235-2) de l'élément de couvercle (235) ou est formé de manière concave au niveau d'une profondeur prédéterminée de sorte que le motif est disposé à l'intérieur d'au moins l'une de la première surface et de la seconde surface de l'élément de couvercle.
